# EUROPEAN PATENT SPECIFICATION

(11) **EP 3 157 203 B1**
(45) Date of publication and mention of the grant of the patent: **04.07.2018**
(21) Application number: 15809972.1
(22) Date of filing: 25.05.2015
(51) Int. Cl.: H04L 12/46, H04L 12/28, H04L 12/66, H04L 12/26

(54) **NETWORK SYSTEM, COMMUNICATION CONTROL METHOD, AND STORAGE MEDIUM**
NETZWERKSYSTEM, KOMMUNIKATIONSSTEUERUNGSVERFAHREN UND SPEICHERMEDIUM
SYSTÈME DE RÉSEAU, PROCÉDÉ DE CONTRÔLE DE COMMUNICATION ET SUPPORT D'INFORMATIONS

(30) Priority: 16.06.2014 JP 2014123046
(43) Date of publication of application: 19.04.2017
(73) Proprietor: Ricoh Company, Ltd., Tokyo 143-8555 (JP)
(72) Inventor: SEGAWA, Hidekazu, Tokyo 143-8555 (JP)
(74) Representative: Schwabe - Sandmair - Marx
(86) International application number: PCT/JP2015/064955
(87) International publication number: WO 2015/194323

(56) References cited:
- WO-A1-2014/045354
- JP-A- 2008 092 465
- JP-A- 2010 087 800
- JP-A- 2012 168 755
- JP-A- 2013 110 458
- JP-A- 2013 135 311
- US-A1- 2005 043 901
- US-A1- 2013 067 063
- US-A1- 2013 219 170
- US-A1- 2013 315 077

## Description

### TECHNICAL FIELD

An aspect of this disclosure relates to a network system.

### BACKGROUND ART

Among various communication nodes supposed to participate in an in-vehicle communication network, there may be an unreliable communication node where an unauthorized activity such as tampering a program has been performed. If such an unreliable communication node is allowed to connect to the in-vehicle communication network, various problems such as damaging peripheral devices and using up the communication band may occur.

There exists a known technology for controlling access to an in-vehicle communication network based on authentication to allow reliable communication nodes to perform communications (see, for example, Patent Document 1). In this technology, whether a tool connected to a connector for connecting external devices is a genuine product is determined to prevent unauthorized activities performed via the connector on in-vehicle devices connected to the in-vehicle communication network.

According to US 2013/0067063 A1, a network device determines a path from itself to a source device in a computer network, where the source device utilizes the path in reverse to reach the network device. Based on determining a reliability of the path in reverse, the network device may dynamically adjust one or more keepalive parameters for keepalive messages sent on the path. Accordingly, the network device may then send keepalive messages on the path based on the dynamically adjusted keepalive parameters.

### [RELATED-ART DOCUMENTS]

### [Patent Document]

[Patent Document 1] Japanese Laid-Open Patent Publication No. 2013-135311

### DISCLOSURE OF INVENTION

### PROBLEMS TO BE SOLVED BY THE INVENTION

In the related-art technology for controlling access to an in-vehicle communication network, whether to allow a communication node to connect to the in-vehicle communication network is determined based on authentication using a certificate and a password. For
this reason, the connection of unauthenticated communication nodes is denied without exception even if they are expected to operate properly.

On the other hand, allowing the connection of a communication node that is not a genuine product and cannot be authenticated may cause adverse effects on the in-vehicle communication network.

One object of this disclosure is to allow a communication node connected to an in-vehicle communication network to function depending on the reliability of the communication node.

### MEANS FOR SOLVING THE PROBLEMS

The invention is defined by the appended claims.

In an aspect of this disclosure, there is provided a network system including one or more communication nodes and a gateway. The gateway includes a monitoring unit configured to monitor a communication parameter of communication performed between the gateway and a newly-connected communication node that is newly connected to the network system; and a communication control unit configured to determine reliability of the newly-connected communication node based on whether the communication parameter monitored by the monitoring unit complies with a predetermined communication condition, and to change the predetermined communication condition based on the determined reliability.

### ADVANTAGEOUS EFFECT OF THE INVENTION

An aspect of this disclosure makes it possible to allow a communication node connected to an in-vehicle communication network to function depending on the reliability of the communication node.

### BRIEF DESCRIPTION OF THE DRAWINGS

FIG. 1 is a drawing illustrating an in-vehicle communication network according to an embodiment;
FIG. 2 is a drawing illustrating a part of the in-vehicle communication network of FIG. 1;
FIG. 3 is a drawing illustrating an example of a hardware configuration of an ECU according to an embodiment;
FIG. 4 is a drawing illustrating an example of a hardware configuration of a network controller according to an embodiment;
FIG. 5 is a block diagram illustrating functional configurations of an ECU and a network controller according to an embodiment;
FIG. 6 is an example of a reliability level-communication control condition table;
FIG. 7 is an example of a reliability level-communication control condition table;
FIG. 8 is a sequence chart illustrating an exemplary process performed in an in-vehicle communication network;
FIG. 9 is a sequence chart illustrating an exemplary process performed in an in-vehicle communication network;
FIG. 10 is a flowchart illustrating an exemplary process performed in an in-vehicle communication network;
FIG. 11 is a drawing illustrating a variation of an in-vehicle communication network;
FIG. 12 is a drawing illustrating a variation of a hardware configuration of a network controller;
FIG. 13 is a block diagram illustrating a variation of a functional configuration of a network controller;
FIG. 14 is a drawing illustrating a variation of an in-vehicle communication network; and
FIG. 15 is a drawing illustrating a variation of an in-vehicle communication network.

### BEST MODE FOR CARRYING OUT THE INVENTION

Embodiments of the present invention are described below with reference to the accompanying drawings. The embodiments described below are examples, and the present invention is not limited to those embodiments. Throughout the accompanying drawings, the same reference number is assigned to components having the same function, and repeated descriptions of the components are omitted.

### «EMBODIMENTS»

### <IN-VEHICLE COMMUNICATION NETWORK>

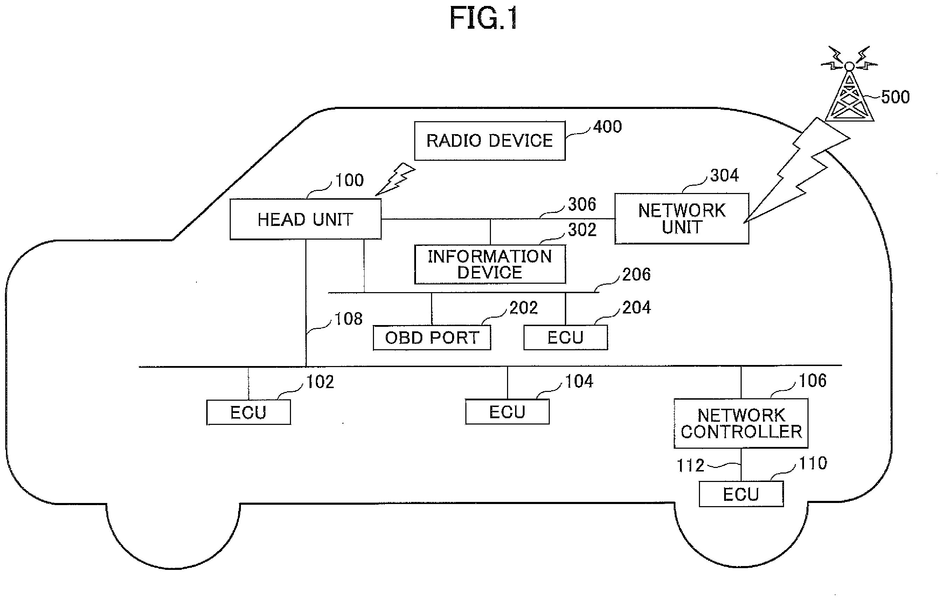

FIG. 1 is a drawing illustrating an in-vehicle communication network according to an embodiment.

The in-vehicle communication network is constituted by one network or a group of connected networks. One or more communication nodes such as components, devices, and electronic control units (ECU) are connected to each network. Also, an external connection port for connecting tools such as a vehicle diagnosis apparatus may be connected to the in-vehicle communication network.

The communication nodes may be replaced for repair, and non-genuine products such as third-party products and custom products may also be connected to the network. Further, a tool or a measuring device may be connected to the external connection port. Here, ECUs are used as examples of communication nodes.

The in-vehicle communication network includes a head unit 100, an ECU 102, an ECU 104, a network controller 106, an ECU 110, an on-board diagnostics (OBD) port 202, an ECU 204, an information device 302, a network unit 304, and a radio device 400.

The head unit 100, the ECU 102, the ECU 104, and the network controller 106 are connected to each other via a first communication bus 108 to form a first network such as a controller area network (CAN), an Ethernet (registered trademark), or a local area network (LAN) . The head unit 100, the OBD port 202, and the ECU 204 are connected to each other via a second communication bus 206 to form a second network such as a CAN, an Ethernet (registered trademark), or a LAN. The head unit 100, the information device 302, and the network unit 304 are connected to each other via a third communication bus 306 to form a third network such as a CAN, an Ethernet (registered trademark), or a LAN. The network controller 106 and the ECU 110 are connected to each other via a fourth communication bus 112 to form a fourth network such as a CAN, an Ethernet (registered trademark), or a LAN.

The head unit 100 includes multimedia functions such as navigation, audio, and video functions, performs radio communications with the radio device 400, and plays, for example, music and video data transmitted from the radio device 400. Also, as described later, the head unit 100 operates based on information input from the network unit 304.

The ECUs 102, 104, 110, and 204 mainly performs engine control operations such as ignition timing adjustment, fuel adjustment, throttle adjustment, valve timing adjustment, and idling adjustment. Also, the ECUs 102, 104, 110, and 204 may be configured to control a brake system such as an antilock brake system (ABS), to perform traction control, and to control electric components such as an air bag, an air conditioner, meters, an immobilizer, and room lamps.

The network controller 106 determines whether to connect the ECU 110 to the first network based on the reliability of the ECU 110. When it is determined to connect the ECU 110 to the first network, the network controller 106 performs transmission control operations such as setting a communication rate to be assigned to the ECU 110 and setting a packet to be transmitted by the ECU 110 to the first network. For example, the network controller 106 adjusts communication parameters for the ECU 110 to limit the communication rate to be assigned and to limit packets to be transferred to the first network.

The OBD port 202 is a port to which, for example, a dedicated terminal is connected to obtain fault diagnosis results recorded by an OBD system. A vehicle mechanic can obtain fault diagnosis results from the OBD port 204, and analyze the obtained fault diagnosis results. For example, when a fault is detected, the OBD system reports the location and the type of the fault by causing a lamp to turn on or blink or causing a buzzer to produce a sound, and records a code corresponding to the type of the fault. Also, a radar detector and external meters may be connected to the OBD port 202 to measure, for example, water temperature, boost pressure, and fuel consumption while a vehicle is running.

The information device 302 stores information obtained by the network unit 304 and outputs the information to the head unit 100.

The network unit 304 performs radio communications with an access point 500 to, for example, obtain map data or download music data from a server (not shown) connected to a network (not shown) connected to the access point 500. For example, when the head unit 100 has a navigation function, the network unit 304 downloads updated map data. As another example, when the head unit 100 has an audio function, the network unit 304 downloads music or video data. Also, as described later, the network unit 304 can receive a service from a server (not shown) connected to a network (not shown) connected to the access point 500 by performing radio communications with the access point 500.

The radio device 400 includes a wireless device such as a wireless LAN module and performs radio communications with the head unit 100.

In the in-vehicle communication network of FIG. 1, the network controller 106 and the ECU 110 are components that are newly added after the in-vehicle communication network is initially built. That is, to newly add a communication node such as the ECU 110 to the first network, the network controller 106 is connected to the first communication bus 108 and the ECU 110 is connected to the network controller 106.

Here, a case where a communication node such as the ECU 110 is newly added to the first network is described. The descriptions below may also be applied to a case where a communication node such as an ECU is newly added to the second network or the third network.

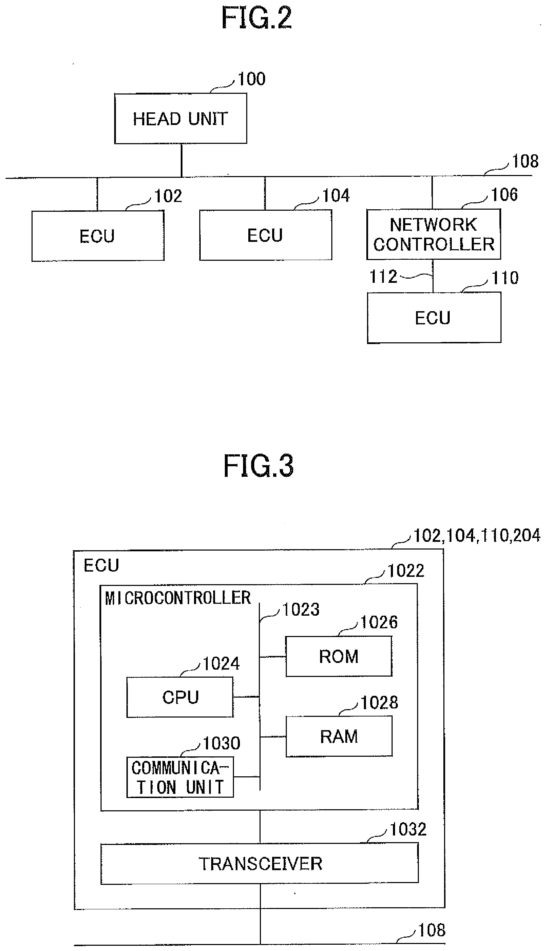

FIG. 2 is a drawing illustrating the first network of the in-vehicle communication network of FIG. 1. As illustrated by FIG. 2, the first network is a bus network where the head unit 100, the ECUs 102 and 104, and the network controller 106 are connected to the first communication bus 108, and the ECU 110 is connected to the network controller 106.

### <HARDWARE CONFIGURATION OF ECU 102>

FIG. 3 is a block diagram illustrating a hardware configuration of the ECU 102 of the present embodiment. As illustrated by FIG. 3, the ECU 102 of the present embodiment includes a central processing unit (CPU) 1024 for controlling the entire operation of the ECU 102 and a read-only memory (ROM) 1026 that stores a program for driving the CPU 1024. The ECU 102 also includes a random access memory (RAM) 1028 used as a work area for the CPU 1024 and a bus line 1023 such as an address bus or a data bus for electrically connecting the components to each other as illustrated in FIG. 3.

The ECU 102 also includes a communication unit 1030 that outputs transmission data input from the CPU 1024 to a transceiver 1032 to transmit the transmission data to the first communication bus 108. The communication unit 103 also receives data from the transceiver 1032 and inputs the received data to the CPU 1024. The CPU 1024, the ROM 1026, the RAM 1028, the communication unit 1030, and the bus line 1023 may be implemented as a microcontroller 1022. The ECU 102 further includes the transceiver 1032 that transmits transmission data input from the communication unit 1030 to the first communication bus 108, and inputs received data received from the first communication bus 108 to the communication unit 1030.

The hardware configuration of the ECU 102 illustrated by FIG. 3 may also be applied to the ECU 104, the ECU 110, and the ECU 204.

### <HARDWARE CONFIGURATION OF NETWORK CONTROLLER 106>

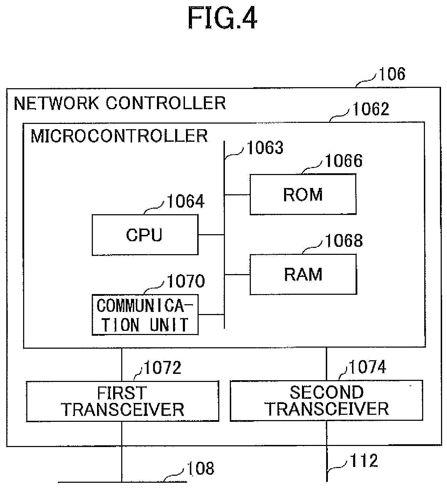

FIG. 4 is a block diagram illustrating a hardware configuration of the network controller 106 of the present embodiment. As illustrated by FIG. 4, the network controller 106 of the present embodiment includes a CPU 1064 for controlling the entire operation of the network controller 106 and a ROM 1066 that stores a program for driving the CPU 1064. The network controller 106 also includes a RAM 1068 used as a work area for the CPU 1064 and a bus line 1063 such as an address bus or a data bus for electrically connecting the components to each other as illustrated in FIG. 4.

The network controller 106 also includes a communication unit 1070 that outputs transmission data input from the CPU 1064 to a first transceiver 1072 or a second transceiver 1074 to transmit the transmission data to the first communication bus 108 or the fourth communication bus 112. The communication unit 1070 also receives data from the transceiver 1072 or the second transceiver 1074 and inputs the received data to the CPU 1064.

The CPU 1064, the ROM 1066, the RAM 1068, the communication unit 1070, and the bus line 1063 may be implemented as a microcontroller 1062.

The network controller 106 includes the first transceiver 1072 that transmits transmission data input from the communication unit 1070 to the first communication bus 108 and inputs received data received from the first communication bus 108 to the communication unit 1070, and the second transceiver 1074 that transmits transmission data input from the communication unit 1070 to the fourth communication bus 112 and inputs received data received from the fourth communication bus 112 to the communication unit 1070.

### <FUNCTIONAL CONFIGURATIONS>

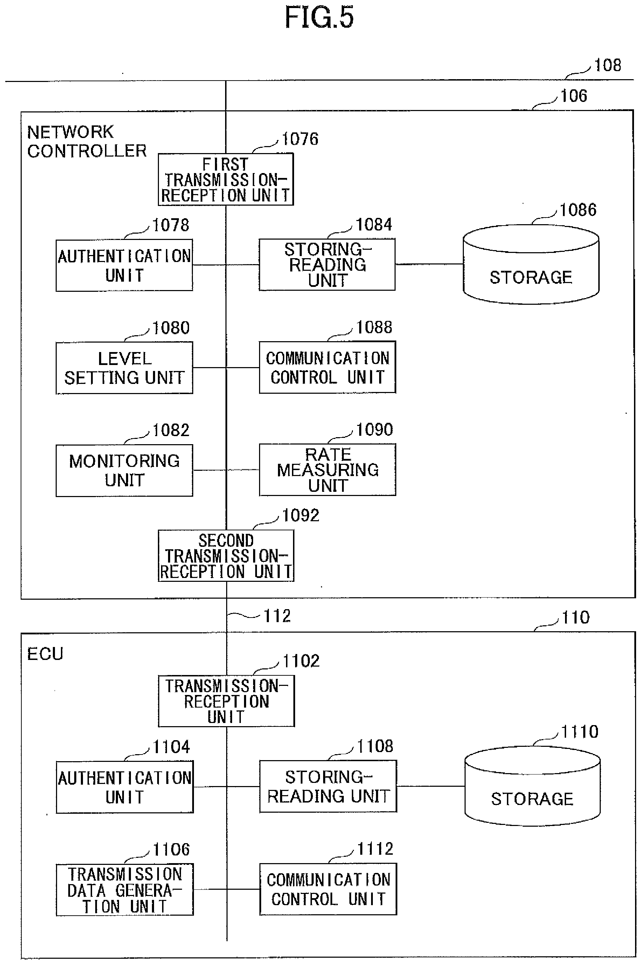

Next, functional configurations of the present embodiment are described. FIG. 5 is a block diagram illustrating functional configurations of the network controller 106 and the ECU 110 of the present embodiment. As illustrated by FIG. 5, the network controller 106 and the ECU 110 are connected via a line to be able to communicate with each other.

### <FUNCTIONAL CONFIGURATION OF ECU 110>

The ECU 110 includes a transmission-reception unit 1102, an authentication unit 1104, a transmission data generation unit 1106, a storing-reading unit 1108, a storage 1110, and a communication control unit 1112. These units are functions or functional components that are implemented by controlling the hardware components illustrated in FIG. 3 by the CPU 1024 according to an ECU program loaded from the ROM 1026 to the RAM 1028.

### <FUNCTIONAL COMPONENTS OF ECU 110>

Next, functional components of the ECU 110 are described in detail with reference to FIGs. 3 and 5. In the descriptions of the functional components of the ECU 110 below, the hardware components of FIG. 3 used to implement the functional components of the ECU 110 are also explained.

The transmission-reception unit 1102 of the ECU 110 in FIG. 5 is implemented by instructions from the CPU 1024 and the communication unit 1030 in FIG. 3, and transmits and receives various types of data (or information) to and from the network controller 106 via the fourth network.

The storing-reading unit 1108 of the ECU 110 in FIG. 5 is implemented by instructions from the CPU 1024 in FIG. 3, and stores and reads various types of data in and from the storage 1110. The storage 1110 stores a node ID for identifying the ECU 110, a reliability level of the ECU 110, and an authentication key such as a password shared with the network controller 106. The node ID may be stored beforehand in the storage 1110 or input to the storage 1110 when a user uses the ECU 110.

In the present embodiment, the node ID indicates identification information such as a language, characters, symbols, or a sign used to uniquely identify an ECU. Also, the node ID may be identification information formed by combining two or more of a language, characters, symbols, and a sign.

The storage 1110 of the ECU 110 in FIG. 5 is implemented by the ROM 1026 in FIG. 3, and stores the node ID of the ECU 110, the reliability level of the ECU 110, and the authentication key such as a password shared with the network controller 106.

The authentication unit 1104 of the ECU 110 in FIG. 5 is implemented by instructions from the CPU 1024 in FIG. 3, and requests the network controller 106 to perform authentication. The authentication unit 1104 causes the storing-reading unit 1108 to read the node ID and the reliability level stored in the storage 1110, generates an authentication request including the node ID and the reliability level, and causes the transmission-reception unit 1102 to transmit the authentication request. Also, when a challenge transmitted from the network controller 106 is received by the transmission-reception unit 1102, the authentication unit 1104 obtains a nonce (random number) included in the challenge, and causes the storing-reading unit 1108 to read the authentication key stored in the storage 1110. Also, the authentication unit 1104 performs a predetermined calculation based on the combination of the obtained nonce and the authentication key, and causes the transmission-reception unit 1102 to transmit the calculation result as a response. Further, when an authentication response transmitted from the network controller 106 is received by the transmission-reception unit 1102 and the authentication response indicates permission of communication, the authentication unit 1104 reports the authentication result to the communication control unit 1112. The authentication unit 1104 can also perform mutual authentication with the network controller 106 using a certificate according to EAP-TLS, and perform authentication according to PEAP. Also, the network controller 106 may be configured to function as a RADIUS server.

The transmission data generation unit 1106 of the ECU 110 in FIG. 5 is implemented by instructions from the CPU 1024 in FIG. 3. The transmission data generation unit 1106 generates various types of data (or information) to be transmitted to other communication nodes, and causes the transmission-reception unit 1102 to transmit the data.

The communication control unit 1112 of the ECU 110 in FIG. 5 is implemented by instructions from the CPU 1024 and the communication unit 1030 in FIG. 3. The communication control unit 1112 controls transmission of data generated by the transmission data generation unit 1106.

### <FUNCTIONAL CONFIGURATION OF NETWORK CONTROLLER 106>

The network controller 106 includes a first transmission-reception unit 1076, an authentication unit 1078, a level setting unit 1080, a monitoring unit 1082, a storing-reading unit 1084, a storage 1086, a communication control unit 1088, a rate measuring unit 1090, and second transmission-reception unit 1092. These components are functions or functional units that are implemented by controlling the hardware components illustrated in FIG. 4 by the CPU 1064 according to a network controller program loaded from the ROM 1066 to the RAM 1068.

### <FUNCTIONAL COMPONENTS OF NETWORK CONTROLLER 106>

Next, functional components of the network controller 106 are described in detail with reference to FIGs. 4 and 5. In the descriptions of the functional components of the network controller 106 below, the hardware components of FIG. 4 used to implement the functional components of the network controller 106 are also explained.

The first transmission-reception unit 1076 of the network controller 106 in FIG. 5 is implemented by instructions from the CPU 1064 and the communication unit 1070 in FIG. 4, and transmits and receives various types of data (or information) to and from other ECUs (the ECUs 102 and 104) and the head unit 100 via the first network.

The second transmission-reception unit 1092 of the network controller 106 in FIG. 5 is implemented by instructions from the CPU 1064 and the communication unit 1070 in FIG. 4, and transmits and receives various types of data (or information) to and from the ECU 110 via the fourth network.

The level setting unit 1080 of the network controller 106 in FIG. 5 is implemented by instructions from the CPU 1064 in FIG. 4, and sets the reliability level of the ECU 110. Reliability levels include a genuine product level, a semi-genuine product level, a market product level, a semi-market product level, and an unauthorized level.

### <RELIABILITY LEVELS>

An ECU of the genuine product level is a genuine product that is sold and certified by a manufacturer that produces and distributes products such as vehicles, and therefore has the highest reliability level.

An ECU of the semi-genuine product level is a product that has special specifications and capabilities and is produced by, for example, a parts manufacturer according to an order from a manufacturer that produces and distributes products such as vehicles. An ECU of the semi-genuine product level provides performance that is greater than or equal to the performance of an ECU of the genuine product level, and has a reliability level next to the reliability level of an ECU of the genuine product level.

An ECU of the market product level is a general-purpose component that has typical specifications, and provides performance that is equivalent to the performance of an ECU of the genuine product level. An ECU of the market product level is a non-genuine product that is compatible with an ECU of the genuine product level, and has a reliability level next to the reliability level of an ECU of the semi-genuine product level.

An ECU of the semi-market product level is a general-purpose component that has typical specifications, and provides performance that is equivalent to the performance of an ECU of the genuine product level. However, the compatibility of an ECU of the semi-market product level with an ECU of the genuine product level is not guaranteed. An ECU of the semi-market product level has a reliability level next to the reliability level of an ECU of the market product level.

An ECU of the unauthorized level is a general-purpose component that has typical specifications. The compatibility of an ECU of the unauthorized level with an ECU of the genuine product level is not guaranteed. An ECU of the unauthorized level has the lowest reliability level. The reliability levels described above are examples. The reliability levels may include two to four levels or six or more levels. Also, the reliability levels may be defined in any other appropriate manner.

Referring back to FIG. 5, the storing-reading unit 1084 of the network controller 106 is implemented by instructions from the CPU 1064 in FIG. 4, and stores and reads various types of data in and from the storage 1086.

The storage 1086 of the network controller 106 in FIG. 5 is implemented by the ROM 1066 in FIG. 4, and stores a node ID table containing node IDs used to identify ECUs that can communicate with the network controller 106 during authentication of ECUs, and an authentication key such as a password shared with the ECU 110. The storage 1086 also stores a reliability level-communication control condition table. The reliability level-communication control condition table is described later.

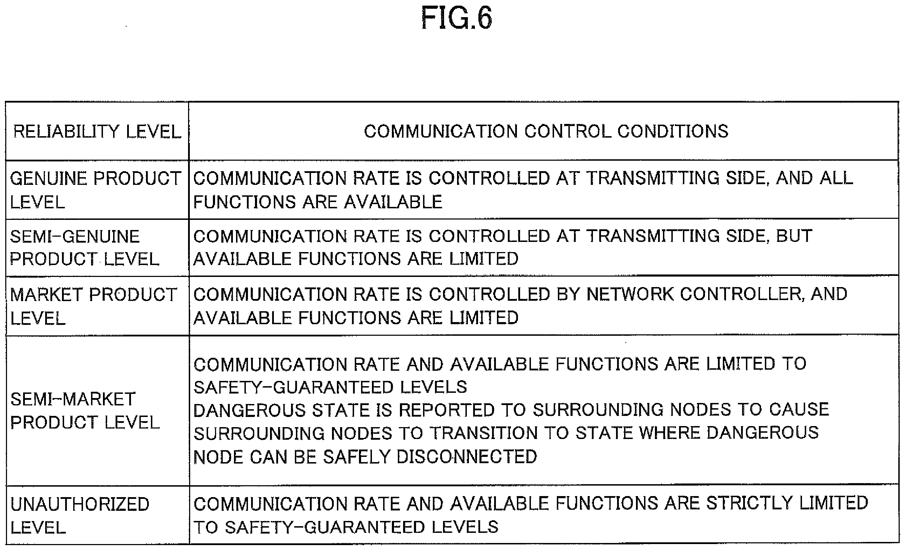

FIG. 6 illustrates a reliability level-communication control condition table where reliability levels are associated with communication control conditions. As illustrated in FIG. 6, in the case of an ECU whose reliability level is the genuine product level, the communication rate (used rate) used for communications is controlled at the transmitting side, and all functions are available. In the case of an ECU whose reliability level is the semi-genuine product level, the communication rate is controlled at the transmitting side, but available functions are limited. In the case of an ECU whose reliability level is the market product level, the communication rate is controlled by the network controller 106, and available functions are limited. In the case of an ECU whose reliability level is the semi-market product level, the communication rate and available functions are limited to safety-guaranteed levels, and a dangerous state is reported to surrounding nodes to cause the surrounding nodes to transition to a state where a dangerous node can be safely disconnected. In the case of an ECU whose reliability level is the unauthorized level, the communication rate and available functions are strictly limited to safety-guaranteed levels.

The communication control conditions of FIG. 6 are examples, and different communication control conditions may be used.

### <RELIABILITY LEVEL-COMMUNICATION CONTROL CONDITION TABLE>

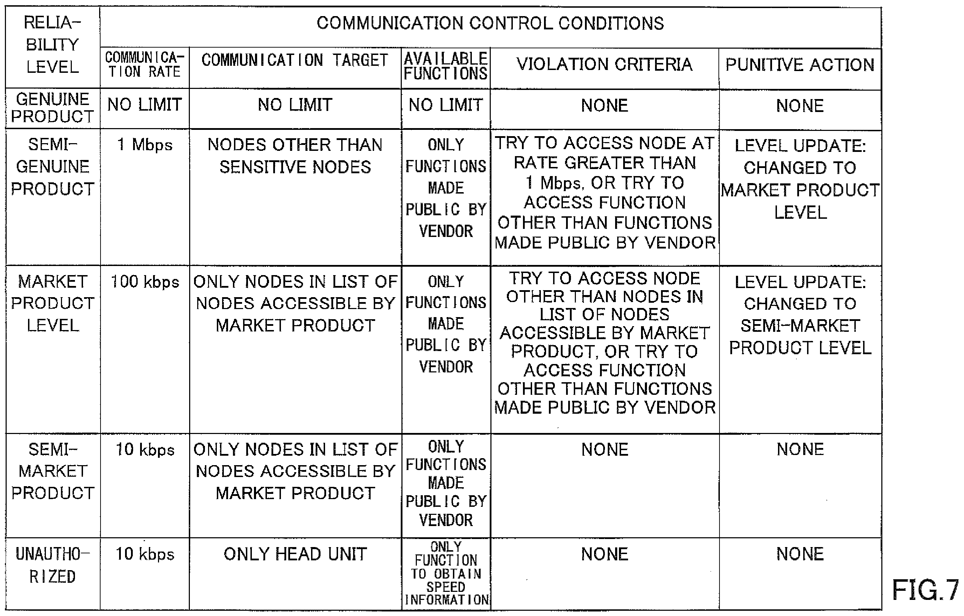

FIG. 7 illustrates an example of the reliability level-communication control condition table. In the reliability level-communication control condition table, communication control conditions are associated with respective reliability levels.

As illustrated by FIG. 7, each reliability level is associated with a communication rate, a communication target, available functions, violation criteria, and a punitive action. The communication rate indicates a speed at which the network controller 106 and the ECU 110 can communicate with each other, and the communication target indicates nodes that the ECU 110 can communicate with. The available functions indicate functions that the ECU 110 can use, and may indicate information that the ECU 110 can access or obtain. The violation criteria are used to determine unauthorized behaviors of ECUs, and the punitive action indicates a process performed for an ECU whose behavior is determined to correspond to the violation criteria.

For an ECU whose reliability level is the genuine product level, the communication rate, the communication target, and the available functions are not limited, and the violation criteria and the punitive action are not set.

In the case of an ECU whose reliability level is the semi-genuine product level, the communication rate is controllable within a range of up to, for example, 1 Mbps that is narrower than that of an ECU whose reliability level is the genuine product level, the communication target is limited to communication nodes other than sensitive nodes, and the available functions are limited to functions made public by the vendor of the ECU. The violation criteria are defined as a case where the ECU tries to access a node at a communication rate greater than 1 Mbps and a case where the ECU tries to access a function other than the functions made public by the vendor. When one of the violation criteria is met, the reliability level of the ECU is changed to a lower reliability level such as the market product level.

In the case of an ECU whose reliability level is the market product level, the communication rate is controllable within a range of up to, for example, 100 kbps that is narrower than that of an ECU whose reliability level is the semi-genuine product level, the communication target is limited to nodes specified as communication nodes that an ECU of the market product level can access, and the available functions are limited to functions made public by the vendor of the ECU. The violation criteria are defined as a case where the ECU tries to access a communication node other than the specified accessible nodes and a case where the ECU tries to access a function other than the functions made public by the vendor. When one of the violation criteria is met, the reliability level of the ECU is changed to a lower reliability level such as the semi-market product level.

In the case of an ECU whose reliability level is the semi-market product level, the communication rate is controllable within a range of up to, for example, 10 kbps that is narrower than that of an ECU whose reliability level is the market product level, the communication target is limited to nodes specified as communication nodes that an ECU of the market product level can access, and the available functions are limited to functions made public by the vendor of the ECU. The violation criteria and the punitive action are not set. This is because the communication rate and the available functions for the ECU of the semi-market product level are strictly limited to safety-guaranteed levels.

In the case of an ECU whose reliability level is the unauthorized level, the communication rate is controllable within a range of up to, for example, 10 kbps that is narrower than that of an ECU whose reliability level is the market product level, the communication target is limited to the head unit 100, and only the function to obtain speed information is available. The violation criteria and the punitive action are not set. This is because the communication rate and the available functions for the ECU of the unauthorized level are strictly limited to safety-guaranteed levels. The communication control conditions of FIG. 7 are examples, and different communication control conditions may be used.

Referring back to FIG. 5, the authentication unit 1078 of the network controller 106 is implemented by instructions from the CPU 1064 in FIG. 4, and performs authentication of the ECU 110. When an authentication request transmitted from the ECU 110 is received by the second transmission-reception unit 1092, the authentication unit 1078 obtains a node ID and a reliability level included in the authentication request.

Also, the authentication unit 1078 causes the storing-reading unit 1084 to read the node ID table stored in the storage 1086, and determines whether the node ID included in the authentication request exists in the node ID table. When the node ID included in the authentication request exists in the node ID table, the authentication unit 1078 generates a nonce (random number) and transmits the nonce via the second transmission-reception unit 1092. Further, similarly to the ECU 110, the authentication unit 1078 performs a predetermined calculation based on the combination of the generated nonce and the authentication key. When a calculation result obtained at the ECU 110 is received from the ECU 110 by the second transmission-reception unit 1092, the authentication unit 1078 performs an authentication process by comparing the calculation result received by the second transmission-reception unit 1092 with the calculation result obtained by the authentication unit 1078. When the calculation results match, the authentication unit 1078 generates an authentication response including information indicating that the authentication has succeeded. When the calculation results do not match, the authentication unit 1078 generates an authentication response including information indicating that the authentication has failed. Then, the authentication unit 1078 transmits the authentication response via the second transmission-reception unit 1092. When the calculation results match, the authentication unit 1078 reports to the communication control unit 1088 that the authentication has succeeded. The authentication unit 1078 can also perform mutual authentication with the ECU 110 using a certificate according to Extensible Authentication Protocol Transport Layer Security (EAP-TLS), and perform authentication according to protected EAP (PEAP). Also, the network controller 106 may be configured to function as a RADIUS server.

The monitoring unit 1082 of the network controller 106 in FIG. 5 is implemented by instructions from the CPU 1064 and the communication unit 1070 in FIG. 4, and monitors the behaviors of the newly-connected ECU 110 such as communication rates at which the ECU 110 transmits packets and nodes that the ECU 110 accesses.

The communication control unit 1088 of the network controller 106 in FIG. 5 is implemented by instructions from the CPU 1064 and the communication unit 1070 in FIG. 4. When successful authentication is reported from the authentication unit 1078, the communication control unit 1088 causes the storing-reading unit 1084 to read the reliability level-communication control condition table stored in the storage 1086, and controls the ECU 110 based on the communication rate, the communication target, and the available functions corresponding to the reliability level determined by the level setting unit 1080. Also, based on the behaviors of the ECU 110 monitored by the monitoring unit 1082 during communications with the ECU 110, the communication control unit 1088 determines whether a violation criterion is met. When a violation criterion is met, the communication control unit 1088 determines to change the reliability level according to the punitive action, and updates the reliability level set in the level setting unit 1080.

The rate measuring unit 1090 of the network controller 106 in FIG. 5 is implemented by instructions from the CPU 1064 and the communication unit 1070 in FIG. 4, and measures the communication rate at which communications are performed between the network controller 106 and the ECU 110.

### <OPERATIONS OF IN-VEHICLE COMMUNICATION NETWORK>

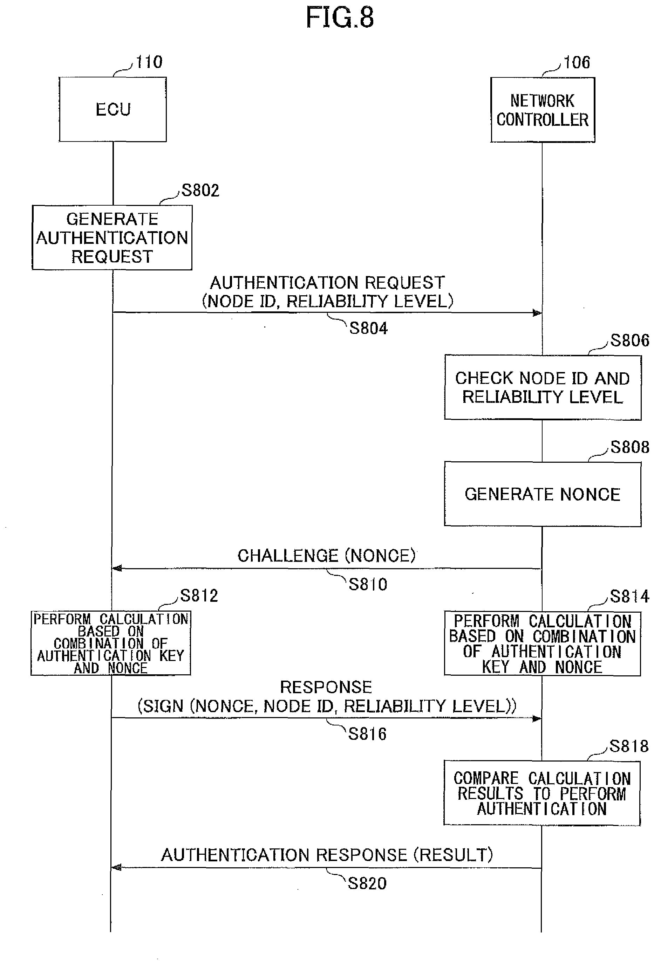

FIG. 8 illustrates an exemplary process performed in the in-vehicle communication network.

In the process of FIG. 8 performed in the in-vehicle communication network, it is assumed that an authentication key such as a password is set beforehand in the ECU 110 and the network controller 106, and the ECU 110 and the network controller 10 are configured to perform calculations according to a predetermined algorithm using the combination of the authentication key and a nonce.

At step S802, the authorization unit 1104 of the ECU 110 generates an authentication request including a node ID and a reliability level.

At step S804, the transmission-reception unit 1102 of the ECU 110 transmits the authentication request generated by the authentication unit 1104 to the network controller 106.

At step S806, when the authentication request is received by the second transmission-reception unit 1092 of the network controller 106, the authentication unit 1078 obtains the received authentication request. The authentication unit 1078 checks the node ID and the reliability level included in the authentication request.

At step S808, after it is confirmed based on the node ID that the network controller 106 and the ECU 110 can communicate with each other, the authentication unit 1078 generates a nonce. In this step, when it cannot be confirmed based on the node ID that the network controller 106 and the ECU 110 can communicate with each other, the authentication unit 1078 may request the ECU 110 to send a node ID again. If it cannot be confirmed that the network controller 106 and the ECU 110 can communicate with each other even after the node ID is requested a predetermined number of times, the authentication unit 1075 may lock the node ID as an account.

At step S810, the second transmission-reception unit 1092 of the network controller 106 transmits the nonce (challenge) generated by the authentication unit 1078 to the ECU 110.

At step S812, when the transmission-reception unit 1102 of the ECU 110 receives the nonce, the authentication unit 1104 performs a calculation based on the combination of the authentication key and the nonce received by the transmission-reception unit 1102.

At step S814, the authorization unit 1078 of the network controller 106 performs a calculation based on the combination of the authentication key and the generated nonce.

At step S816, the transmission-reception unit 1102 of the ECU 110 transmits the calculation result of the authentication unit 1104 to the network controller 106 as a response.

At step S818, when the second transmission-reception unit 1092 of the network controller 106 receives the response, the authentication unit 1078 compares the calculation result of step S814 with the calculation result transmitted from the ECU 110 at step S816 to perform authentication of the ECU 110.

At step S820, the authentication unit 1078 of the network controller 106 transmits the result of authentication performed at step S818 via the second transmission-reception unit 1092 to the ECU 110.

When the authentication of the ECU 110 has succeeded at step S818, the authentication unit 1078 sets the reliability level of the ECU 110 in the level setting unit 1080, and reports to the communication control unit 1088 that the authentication has succeeded.

With the above process, the network controller 106 can determine whether it is possible to communicate with a newly-connected ECU 110, and set the reliability level of the ECU 110 when it is determined that the network controller 106 can communicate with the ECU 110.

The process illustrated by the sequence chart of FIG. 8 is an example, and the steps in the sequence chart may be performed in a different order. For example, the order of steps S814 and S816 may be reversed.

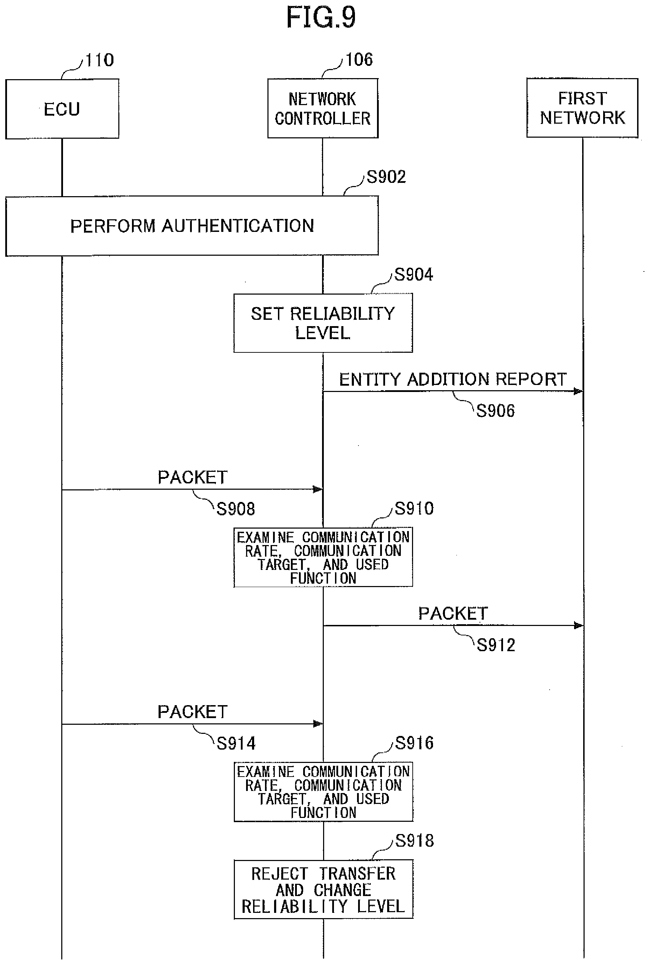

FIG. 9 illustrates an exemplary process performed in the in-vehicle communication network.

FIG. 9 illustrates a process performed after the ECU 110 is authenticated by the network controller 106.

At step S902, the authentication unit 1078 of the network controller 106 performs authentication of the ECU 110. In this process, it is assumed that the ECU 110 is successfully authenticated by the authentication unit 1078.

At step S904, when the authentication of the ECU 110 has succeeded, the authentication unit 1078 of the network controller 106 sets the reliability level of the ECU 110 in the level setting unit 1080, and reports to the communication control unit 1088 that the authentication of the ECU 110 has succeeded.

At step S906, the communication control unit 1088 of the network controller 106 transmits a report indicating that an entity has been added via the first transmission-reception unit 1076 to the head unit 100, the ECU 102, and the ECU 104 constituting the first network.

As step S908, the transmission data generation unit 1106 of the ECU 110 generates a packet including transmission data, and the communication control unit 1112 transmits the packet generated by the transmission data generation unit 1106 via the transmission-reception unit 1102.

At step S910, the second transmission-reception unit 1092 of the network controller 106 receives the packet transmitted from the ECU 110 and inputs the packet to the communication control unit 1088. When the packet is input from the second transmission-reception unit 1092, the communication control unit 1088 causes the storing-reading unit 1084 to read the reliability level-communication control condition table stored in the storage 1086, and identifies the communication rate at which the packet is transmitted, the communication target to which the packet is to be transmitted, and a function to be used by the packet.

The communication control unit 1088 refers to the communication rate, the communication target, and the available functions associated with the reliability level of the ECU 110 in the reliability level-communication control condition table, and determines whether the packet transmitted from the ECU 110 comply with these conditions.

At step S912, when it is determined that the packet transmitted from the ECU 110 complies with the communication rate, the communication target, and the available functions associated with the reliability level of the ECU 110 in the reliability level-communication control condition table, the communication control unit 1088 transmits the packet via the first transmission-reception unit 1076 to the first network.

As step S914, the transmission data generation unit 1106 of the ECU 110 generates a packet including transmission data, and the communication control unit 1112 transmits the packet generated by the transmission data generation unit 1106 via the transmission-reception unit 1102.

At step S916, the second transmission-reception unit 1092 of the network controller 106 receives the packet transmitted from the ECU 110 and inputs the packet to the communication control unit 1088. When the packet is input from the second transmission-reception unit 1092, the communication control unit 1088 causes the storing-reading unit 1084 to read the reliability level-communication control condition table stored in the storage 1086, and identifies the communication rate at which the packet is transmitted, the communication target to which the packet is to be transmitted, and a function to be used by the packet. The communication control unit 1088 refers to the communication rate, the communication target, and the available functions associated with the reliability level of the ECU 110 in the reliability level-communication control condition table, and determines whether the packet transmitted from the ECU 110 complies with these conditions.

At step S918, when it is determined that the packet transmitted from the ECU 110 does not comply with the communication rate, the communication target, and the available functions associated with the reliability level of the ECU 110 in the reliability level-communication control condition table, the communication control unit 1088 rejects the transfer of the packet. Also, the communication control unit 1088 determines whether a violation criterion associated with the reliability level of the ECU 110 in the reliability level-communication control condition table is met, and changes the reliability level of the ECU 110 when the violation criterion is met.

Also, when it is determined at step S918 that the packet transmitted from the ECU 110 does not comply with the communication rate, the communication target, and the available functions associated with the reliability level of the ECU 110 in the reliability level-communication control condition table, the communication control unit 1088 may limit functions available for packets to be transmitted from the ECU 110 after the determination. Also, the communication control unit 1088 may reduce the communication rate of packets to be transmitted from the ECU 110 after the determination.

Also, when it is determined at step S918 that the packet transmitted from the ECU 110 does not comply with the communication rate, the communication target, and the available functions associated with the reliability level of the ECU 110 in the reliability level-communication control condition table, the communication control unit 1088 may delay the transmission of the packet. Also, the communication control unit 1088 may reduce the frequency of transferring packets received from the ECU 110. Further, the communication control unit 1088 may transfer some of packets received from the ECU 110 and nullify the rest of the packets by, for example, destroying them.

With the above process, the network controller 106 can determine whether to transfer packets received from a newly-connected ECU 110 to the first network based on the reliability level of the ECU 110. Accordingly, even after the ECU 110 is authenticated, the network controller 106 can transfer, to the first network, only packets that are safe in terms of security among all packets transmitted from the ECU 110.

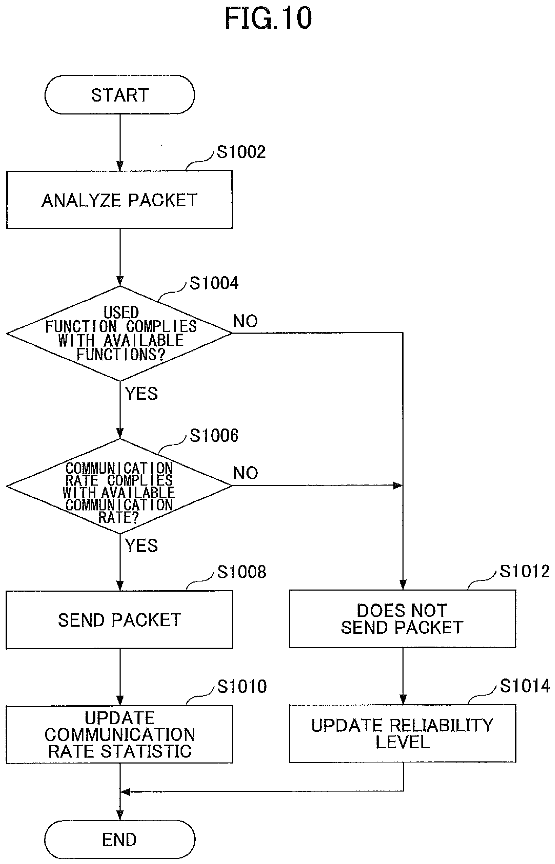

FIG. 10 illustrates an exemplary process performed in the in-vehicle communication network.

FIG. 10 illustrates a process performed by the network controller 106 to determine whether to transfer a packet transmitted from the ECU 110. Thus, the process of FIG. 10 corresponds to steps S910, S916, and S918 in FIG. 9.

At step S1002, the monitoring unit 1082 of the network controller 106 analyzes a packet transmitted from the ECU 110. More specifically, the monitoring unit 1082 analyzes the communication rate at which the packet is transmitted by the ECU 110 and a function to be used by the packet.

At step S1004, the communication controller 1088 of the network controller 106 causes the storing-reading unit 1084 to read the reliability level-communication control condition table stored in the storage 1086. Then, the communication control unit 1088 determines whether the function to be used by the packet analyzed by the monitoring unit 1082 complies with the available functions in the reliability level-communication control condition table.

At step S1006, when the function to be used by the packet analyzed by the monitoring unit 1082 complies with the available functions in the reliability level-communication control condition table, the communication control unit 1088 determines whether the communication rate of the packet analyzed by the monitoring unit 1082 complies with the communication rate in the reliability level-communication control condition table.

At step S1008, when it is determined that the communication rate of the packet analyzed by the monitoring unit 1082 complies with the communication rate in the reliability level-communication control condition table, the communication control unit 1088 transmits the packet via the first transmission-reception unit 1076.

At step S1010, the rate measuring unit 1090 of the network controller 106 measures the communication rate at which communications are performed between the network controller 106 and the ECU 110, and updates a communication rate statistic. The updated communication rate statistic is used to judge the communication rate at step S1006 for a packet to be transmitted thereafter.

At step S1012, when the function to be used by the packet analyzed by the monitoring unit 1082 does not comply with the available functions in the reliability level-communication control condition table at step S1004 or when the communication rate of the packet analyzed by the monitoring unit 1082 does not comply with the communication rate in the reliability level-communication control condition table, the communication control unit 1088 does not transmit the packet.

At step S1014, based on the behaviors of the ECU 110 monitored by the monitoring unit 1082, the communication control unit 1088 of the network controller 106 determines whether a violation criterion is met. When a violation criterion is met, the communication control unit 1088 determines to change the reliability level according to the punitive action, and updates the reliability level set in the level setting unit 1080.

With the above process, the network controller 106 can determine whether packets transmitted from a newly-connected ECU 110 are safe, and transfer only the packets that are determined to be safe to the first network. In FIG. 10, whether a packet is safe is determined based on the communication rate of the packet and the function to be used by the packet. However, whether a packet is safe may be determined based on another parameter such as the communication target in addition to or instead of the communication rate and the function.

The above embodiment is described using a so-called bus network where the head unit 100, the ECUs 102 and 104, and the network controller 106 are connected to the first communication bus 108, and the ECU 110 is connected to the network controller 106. However, the present invention may also be applied to other types of networks.

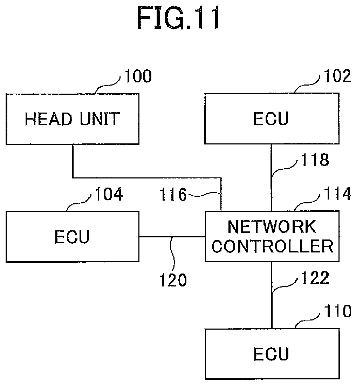

FIG. 11 is a drawing illustrating a first network implemented as a star network. As illustrated by FIG. 11, when the first network is implemented as a star network, a network controller 114 is used as a hub, and the head unit 100, the ECU 102, the ECU 104, and the ECU 110 are connected radially to the network controller 114. In FIG. 11, the ECU 110 is a newly-connected communication node. When the first network is implemented as a star network, a newly-connected ECU 110 is connected to the network controller 114 that is already a part of the first network.

Here, a case where the first network is implemented as a star network is described. However, the descriptions below may also be applied to, for example, the second through fourth networks.

The network controller 114 and the head unit 100 are connected to each other via a fifth communication bus 116, the network controller 114 and the ECU 102 are connected to each other via a sixth communication bus 118, the network controller 114 and the ECU 104 are connected to each other via a seventh communication bus 120, and the network controller 114 and the ECU 110 are connected to each other via an eighth communication bus 122. The ECU 102, the ECU 104, and the ECU 110 may have the configuration as described above. On the other hand, the network controller 114 to which four nodes are connected has a configuration different from the configuration of the network controller 106.

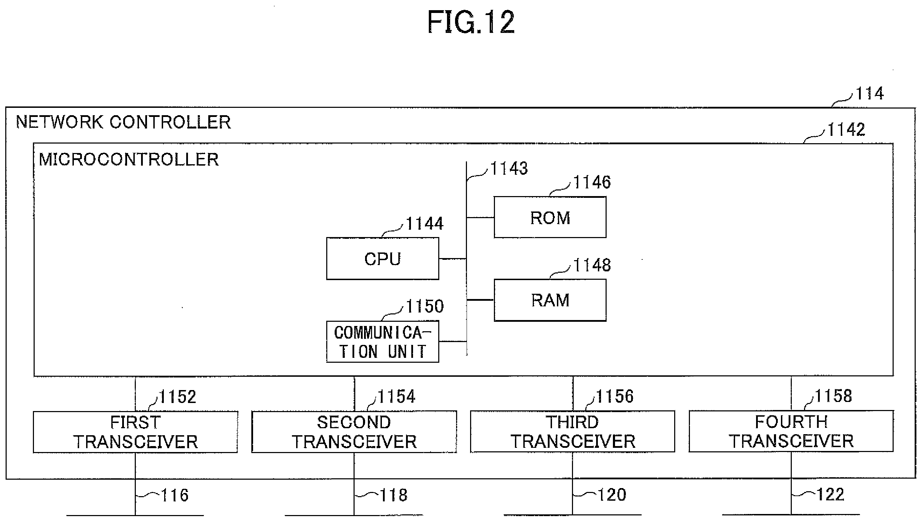

FIG. 12 is a drawing illustrating a hardware configuration of the network controller 114. As illustrated by FIG. 12, the network controller 114 a CPU 1144 for controlling the entire operation of the network controller 114 and a ROM 1146 that stores a program for driving the CPU 1144. The network controller 114 also includes a RAM 1148 used as a work area for the CPU 1144 and a bus line 1143 such as an address bus or a data bus for electrically connecting the components to each other as illustrated in FIG. 12.

The network controller 114 also includes a communication unit 1150 that outputs transmission data input from the CPU 1144 to a first transceiver 1152, a second transceiver 1154, a third transceiver 1156, or a fourth transceiver 1158 to transmit the transmission data to the fifth communication bus 116, the sixth communication bus 118, the seventh communication bus 120, or the eighth communication bus 122. The communication unit 1150 also receives data from the first transceiver 1152, the second transceiver 1154, the third transceiver 1156, or the fourth transceiver 1158 and inputs the received data to the CPU 1144. The CPU 1144, the ROM 1146, the RAM 1148, and the communication unit 1150 may be implemented as a microcontroller 1142.

The network controller 114 also includes the first transceiver 1152 that transmits transmission data input from the communication unit 1150 to the fifth communication bus 116, and inputs received data received from the fifth communication bus 116 to the communication unit 1150. The network controller 114 also includes the second transceiver 1154 that transmits transmission data input from the communication unit 1150 to the sixth communication bus 118, and inputs received data received from the sixth communication bus 118 to the communication unit 1150.

The network controller 114 also includes the third transceiver 1156 that transmits transmission data input from the communication unit 1150 to the seventh communication bus 120, and inputs received data received from the seventh communication bus 120 to the communication unit 1150. The network controller 114 also includes the fourth transceiver 1158 that transmits transmission data input from the communication unit 1150 to the eighth communication bus 122, and inputs received data received from the eighth communication bus 122 to the communication unit 1150.

### <FUNCTIONAL CONFIGURATION OF NETWORK CONTROLLER 114>

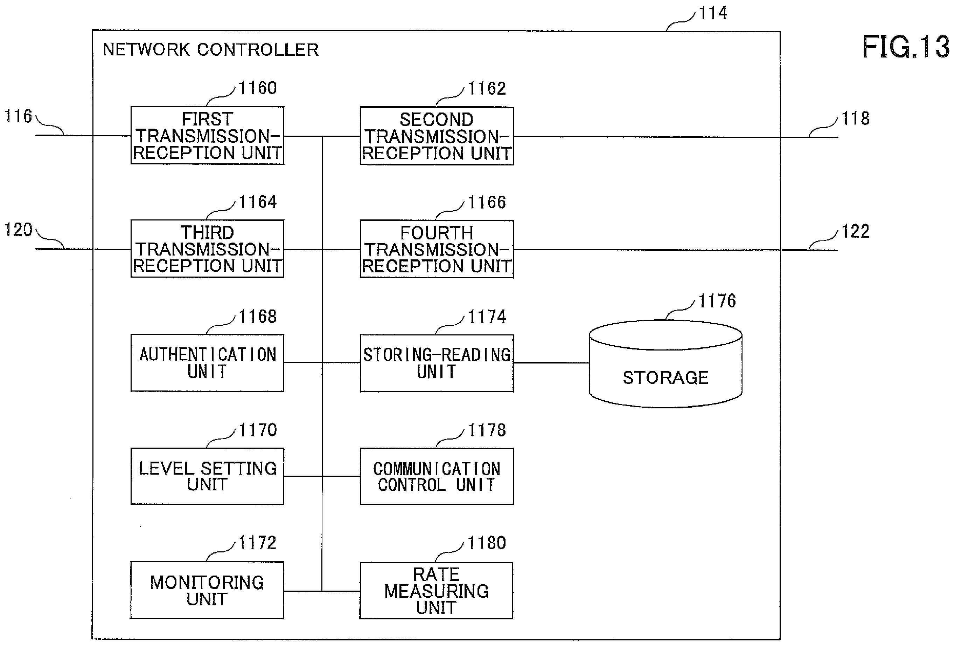

FIG. 13 is a block diagram illustrating a functional configuration of the network controller 114.

The network controller 114 includes a first transmission-reception unit 1160, a second transmission-reception unit 1162, a third transmission-reception unit 1164, a fourth transmission-reception unit 1166, an authentication unit 1168, a level setting unit 1170, a monitoring unit 1172, a storing-reading unit 1174, a storage 1176, a communication control unit 1178, and a rate measuring unit 1180. These components are functions or functional units that are implemented by controlling the hardware components illustrated in FIG. 12 by the CPU 1144 according to a network controller program loaded from the ROM 1146 to the RAM 1148.

### <FUNCTIONAL COMPONENTS OF NETWORK CONTROLLER 114>

Next, functional components of the network controller 114 are described in detail with reference to FIGs. 12 and 13. In the descriptions of the functional components of the network controller 114 below, the hardware components of FIG. 12 used to implement the functional components of the network controller 114 are also explained.

The first transmission-reception unit 1160 of the network controller 114 in FIG. 13 is implemented by instructions from the CPU 1144 and the communication unit 1150 in FIG. 12, and transmits and receives various types of data (or information) to and from the head unit 100 via the fifth communication bus 116.

The second transmission-reception unit 1162 of the network controller 114 in FIG. 13 is implemented by instructions from the CPU 1144 and the communication unit 1150 in FIG. 12, and transmits and receives various types of data (or information) to and from the ECU 102 via the sixth communication bus 118.

The third transmission-reception unit 1164 of the network controller 114 in FIG. 13 is implemented by instructions from the CPU 1144 and the communication unit 1150 in FIG. 12, and transmits and receives various types of data (or information) to and from the ECU 104 via the seventh communication bus 120.

The fourth transmission-reception unit 1166 of the network controller 114 in FIG. 13 is implemented by instructions from the CPU 1144 and the communication unit 1150 in FIG. 12, and transmits and receives various types of data (or information) to and from the ECU 110 via the eighth communication bus 122.

The level setting unit 1170 of the network controller 114 in FIG. 13 is implemented by instructions from the CPU 1144 in FIG. 12, and sets the reliability level of the ECU 110. Reliability levels include a genuine product level, a semi-genuine product level, a market product level, a semi-market product level, and an unauthorized level. The definitions of the reliability levels may be the same as those described above.

The storing-reading unit 1174 of the network controller 114 in FIG. 13 is implemented by instructions from the CPU 1144 in FIG. 12, and stores and reads various types of data in and from the storage 1176. The storage 1176 stores a node ID table containing node IDs used to identify ECUs that can communicate with the network controller 114 during authentication of ECUs. The storage 1176 also stores a reliability level-communication control condition table. The reliability level-communication control condition table may have the same configuration as described above.

The storage 1176 of the network controller 114 in FIG. 13 is implemented by the ROM 1146 in FIG. 12, and stores a node ID table containing node IDs used to identify ECUs that can communicate with the network controller 114 during authentication of ECUs, and an authentication key such as a password shared with the ECU 110. The storage 1076 also stores a reliability level-communication control condition table. The reliability level-communication control condition table may have the same configuration as described above.

The authentication unit 1168 of the network controller 114 in FIG. 13 is implemented by instructions from the CPU 1144 in FIG. 12, and performs authentication of the ECU 110. When an authentication request transmitted from the ECU 110 is received by the fourth transmission-reception unit 1166, the authentication unit 1168 obtains a node ID and a reliability level included in the authentication request.

Also, the authentication unit 1168 causes the storing-reading unit 1174 to read the node ID table stored in the storage 1176, and determines whether the node ID included in the authentication request exists in the node ID table. When the node ID included in the authentication request exists in the node ID table, the authentication unit 1168 generates a nonce (random number) and transmits the nonce via the fourth transmission-reception unit 1166. Further, similarly to the ECU 110, the authentication unit 1168 performs a predetermined calculation based on the combination of the generated nonce and the authentication key. When a calculation result obtained at the ECU 110 is received from the ECU 110 by the fourth transmission-reception unit 1166, the authentication unit 1168 performs an authentication process by comparing the calculation result received by the fourth transmission-reception unit 1166 with the calculation result obtained by the authentication unit 1168. When the calculation results match, the authentication unit 1168 generates an authentication response including information indicating that the authentication has succeeded. When the calculation results do not match, the authentication unit 1168 generates an authentication response including information indicating that the authentication has failed. Then, the authentication unit 1168 transmits the authentication response via the fourth transmission-reception unit 1166. When the calculation results match, the authentication unit 1168 reports to the communication control unit 1178 that the authentication has succeeded. The authentication unit 1168 can also perform mutual authentication with the ECU 110 using a certificate according to EAP-TLS, and perform authentication according to PEAP. Also, the network controller 114 may be configured to function as a RADIUS server.

The monitoring unit 1172 of the network controller 114 in FIG. 13 is implemented by instructions from the CPU 1144 and the communication unit 1150 in FIG. 12, and monitors the behaviors of the newly-connected ECU 110 such as communication rates at which the ECU 110 transmits packets and nodes that the ECU 110 accesses.

The communication control unit 1178 of the network controller 114 in FIG. 13 is implemented by instructions from the CPU 1144 and the communication unit 1150 in FIG. 12. When successful authentication is reported from the authentication unit 1168, the communication control unit 1178 causes the storing-reading unit 1174 to read the reliability level-communication control condition table stored in the storage 1176, and controls the ECU 110 based on the communication rate, the communication target, and the available functions corresponding to the reliability level determined by the level setting unit 1170. Also, based on the behaviors of the ECU 110 monitored by the monitoring unit 1172 during communications with the ECU 110, the communication control unit 1178 determines whether a violation criterion is met. When a violation criterion is met, the communication control unit 1170 determines to change the reliability level according to the punitive action, and updates the reliability level set in the level setting unit 1070.

The rate measuring unit 1180 of the network controller 114 in FIG. 13 is implemented by instructions from the CPU 1144 and the communication unit 1050 in FIG. 12, and measures the communication rate at which communications are performed between the network controller 114 and the ECU 110.

Thus, the in-vehicle communication network can be implemented not only as a bus network but also as a star network.

In the example of FIG. 11 where the first network is implemented as a star network, a first subnetwork may be formed by the head unit 100 and the ECU 102, and a second subnetwork may be formed by the ECU 104 and the ECU 110. In this case, the network controller 114 may be configured to perform the above-described processes for communications between communication nodes belonging to different subnetworks such as communications between the head unit 100 and the ECU 104 or the ECU 110, and communications between the ECU 102 and the ECU 104 or the ECU 110.

According to the in-vehicle communication network of the above embodiment, it is possible to limit functions used by ECUs or tools joining the in-vehicle communication network based on their reliability levels.

### <FIRST VARIATION>

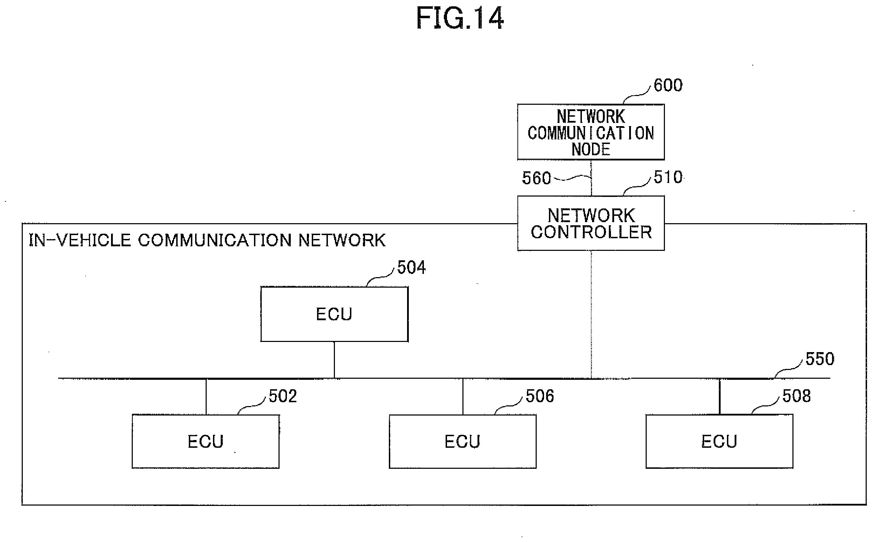

FIG. 14 is a drawing illustrating a variation of an in-vehicle communication network. In this variation of the in-vehicle communication network, a tool is connected to the in-vehicle communication network.

The in-vehicle communication network includes an ECU 502, an ECU 504, an ECU 506, an ECU 508, and a network controller 510.

The ECU 502, the ECU 504, the ECU 506, the ECU 508, and the network controller 510 are connected to each other via a ninth communication bus 550 to form a fifth network such as a CAN, an Ethernet (registered trademark), or a LAN.

The configurations of the ECU illustrated by FIGs. 3 and 5 may be applied to the ECU 502, the ECU 504, the ECU 506, and the ECU 508. In this case, the transceiver 1032 is connected to the ninth communication bus 550. The configurations of the network controller 106 illustrated by FIGs. 4 and 5 may be applied to the network controller 510. In this case, the first transceiver 1072 is connected to the ninth communication bus 550, and the second transceiver 1074 is connected to a tenth communication bus 560. The network controller 510 may be configured to also function as a gateway, a data link connector (DLC), and a diagnostic connection port.

A network communication node 600 is newly connected to the network controller 510 that also functions as a data link connector. The configurations of the ECU 110 illustrated by FIGs. 3 and 5 may be applied to the network communication node 600. Also, a diagnostic tool such as an engine adjustment-debug tool or a development-debug tool may be connected to the network controller 510 that also functions as a diagnostic connection port. In this case, the network controller 510 may be configured to set the accessible targets and the available functions of the diagnostic tool based on the reliability level of the diagnostic tool.

Also, when the vehicle is a hybrid car or an electric car, a battery as a supplied part may be connected to the network controller 510. In this case, the network controller 510 can provide a wider range of management services for a genuine battery.

### <SECOND VARIATION>

Functions of the network controller 106 may be included in the network unit 304 in FIG. 1. The network unit 304 can communicate with a server (not shown) via an access point using a radio communication technology such as Wireless Fidelity (WiFi), Bluetooth (registered trademark), or mobile communications. The functions of the network controller 106 enable the network unit 304 to change services provided based on information obtained through radio communications depending on whether the driver is the owner of the vehicle or not. Also, the functions of the network controller 106 enable the network unit 304 to adjust the communication band for communications with the access point 500 or the priority of information to be input to the information device 302, based on information obtained through radio communications. Further, based on information obtained through radio communications, the network unit 304 can change the level of access to, for example, an ECU. For example, it is possible to change the level of access to the vehicle depending on whether information obtained through radio communications is a service provided by an original equipment manufacturer (OEM) or a service provided by a supplier or a dealer.

### <THIRD VARIATION>

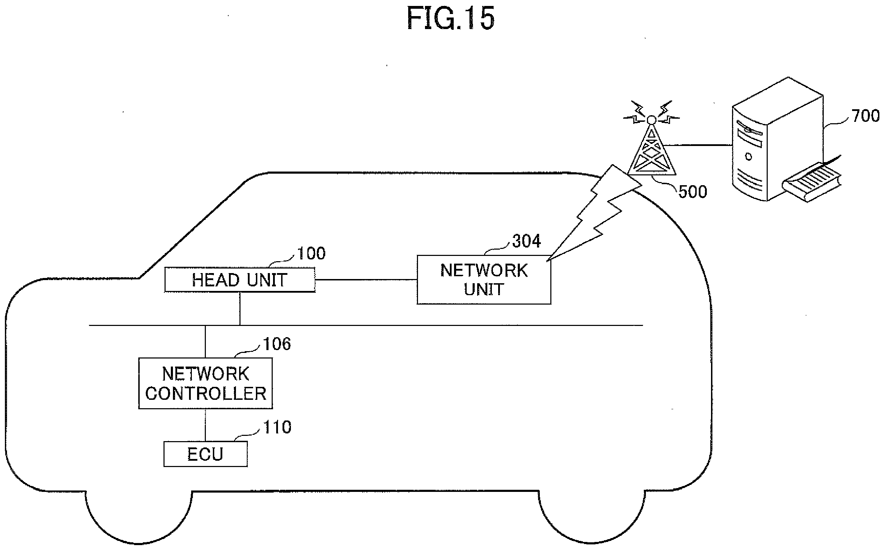

FIG. 15 is a drawing illustrating a third variation of an in-vehicle communication network. As illustrated by FIG. 15, the in-vehicle communication network includes the head unit 100, the network controller 106, the ECU 110, and the network unit 304. The head unit 100, the network controller 106, the ECU 110, and the network unit 304 have configurations described above (FIGs. 3-5).

In the in-vehicle communication network of the third variation, the network controller 106 requests the network unit 304 via the head unit 100 to access a cloud server 700 that proves an authentication service, and performs processes based on an authentication result sent from the cloud server 700.

More specifically, the network controller 106 transmits an authentication request received from the ECU 110 to the network unit 304 via the head unit 100. The network unit 304 receives the authentication request from the network controller 106 and wirelessly transmits or redirects the authentication request via the access point 500 to the cloud server 700 that provides an authentication service. For example, the network unit 304 accesses the cloud server 700 that provides an authentication service via the access point 500 using a radio communication technology such as WiFi, Bluetooth (registered trademark), or mobile communications. The network unit 304 performs authentication of the ECU 110 based on a response from the cloud server 700 providing the authentication service. The network unit 304 may be configured to cache information processed by the cloud server 700 providing the authentication service. This configuration makes it possible to improve the performance of the network unit 304. Here, it is expected that up-to-date information is stored in the cloud server 700. Performing an authentication process based on the up-to-date information makes it possible to improve security.

In the above embodiments and variations, an in-vehicle communication network is an example of a network system, an ECU is an example of a communication node, and a network controller is an example of a gateway. Also, the communication rate, the communication target, and the available functions are examples of communication parameters, and the violation criteria are examples of communication conditions.

Embodiments and their variations of the present invention are described above. However, the embodiments and the variations are examples, and the present invention is not limited to those embodiments and variations. Although apparatuses are described using functional block diagrams in the above embodiments, the apparatuses may be implemented by hardware, software, or a combination thereof. The present invention is not limited to the specifically disclosed embodiments, and variations and modifications may be made without departing from the scope of the present invention.

### EXPLANATION OF REFERENCES

- 100: Head unit
- 102: ECU
- 104: ECU
- 106: Network controller
- 108: First communication bus
- 110: ECU
- 112: Fourth communication bus
- 202: OBD port
- 204: ECU
- 206: Second communication bus
- 302: Information device
- 304: Network unit
- 306: Third communication bus
- 400: Radio device
- 500: Access point
- 1022: Microcontroller
- 1024: CPU
- 1026: ROM
- 1028: RAM
- 1030: Communication unit
- 1032: Transceiver
- 1062: Microcontroller
- 1064: CPU
- 1066: ROM
- 1068: RAM
- 1070: Communication unit
- 1072: First transceiver
- 1074: Second transceiver
- 1076: First transmission-reception unit
- 1078: Authentication unit
- 1080: Level setting unit
- 1082: Monitoring unit
- 1084: Storing-reading unit
- 1086: Storage
- 1088: Communication control unit
- 1090: Rate measuring unit
- 1092: Second transmission-reception unit
- 1102: Transmission-reception unit
- 1104: Authentication unit
- 1106: Transmission data generation unit
- 1108: Storing-reading unit
- 1110: Storage
- 1112: Communication control unit

## Claims

1. A network system, comprising:
one or more communication nodes (102, 104, 110); and
a gateway including
a monitoring unit (1082) configured to monitor a communication parameter of communication performed between the gateway and a newly-connected communication node (110) that is newly connected to the network system, and
a communication control unit (1088) configured to
determine a reliability level of the newly-connected communication node (110) based on whether the communication parameter monitored by the monitoring unit (1082) complies with a predetermined communication condition, and
change the predetermined communication condition based on the determined reliability level, wherein
the gateway (106) further includes a first authentication unit (1078) configured to authenticate the newly-connected communication node (110);
the monitoring unit (1082) is configured to monitor the communication parameter of the communication performed between the gateway (106) and the newly-connected communication node (110) that has been authenticated by the first authentication unit (1078);
the communication control unit (1088) is configured to identify the predetermined communication condition based on reliability information transmitted from the newly-connected communication node (110) and to determine the reliability level of the newly-connected communication node (110) based on the identified predetermined communication condition; and
the newly-connected communication node (110) includes a second authentication unit (1104) configured to transmit the reliability information of the newly-connected communication node (110) when requesting the gateway (106) to authenticate the newly-connected communication node (110).

2. The network system as claimed in claim 1, wherein
the network system includes a plurality of the communication nodes (102, 104, 110);
the plurality of the communication nodes (102, 104, 110) form multiple subnetworks; and
the communication control unit (1088) is configured to determine the reliability level of the newly-connected communication node (110) based on whether the communication parameter monitored by the monitoring unit (1082) complies with the predetermined communication condition when communication is to be performed between the communication nodes (102, 104, 110) belonging to different subnetworks, and to change the predetermined communication condition based on the determined reliability level.

3. The network system as claimed in claim 1, wherein the monitoring unit (1082) is configured to monitor one of a communication rate of the communication between the gateway (106) and the newly-connected communication node (110), a communication target of the newly-connected communication node (110), and a function available for the newly-connected communication node (110).

4. A communication control method performed by a gateway (106) in a network system including one or more communication nodes (102, 104, 110) and the gateway (106), the communication control method comprising:
transmitting, by a second authentication unit (1104) included in the newly-connected communication node (110), reliability information of the newly-connected communication node (110) when requesting the gateway (106) to authenticate the newly-connected communication node (110);
authenticating, by a first authentication unit (1078) included in the gateway (106), the newly-connected communication node (110);
monitoring a communication parameter of communication performed between the gateway (106) and the newly-connected communication node (110) that is newly connected to the network system and has been authenticated;
identifying a predetermined communication condition based on the reliability information transmitted from the newly-connected communication node (110);
determining a reliability level of the newly-connected communication node (110) based on whether the monitored communication parameter complies with the identified predetermined communication condition; and
changing the predetermined communication condition based on the determined reliability level.

5. A computer-readable storage medium storing a program for causing a gateway (106) in a network system including one or more communication nodes (102, 104, 110) and the gateway (106) to execute the communication control method of the preceding claim.

## Patentansprüche

1. Netzsystem, umfassend:
einen oder mehrere Kommunikationsknoten (102, 104, 110); und
ein Gateway, das Folgendes beinhaltet:
eine Überwachungseinheit (1082), die konfiguriert ist, um einen Kommunikationsparameter einer Kommunikation zu überwachen, die zwischen dem Gateway und einem neu angeschlossenen Kommunikationsknoten (110) durchgeführt wird, der neu an das Netzsystem angeschlossen wird, und
eine Kommunikationssteuereinheit (1088), die zu Folgendem konfiguriert ist:
Bestimmen eines Zuverlässigkeitsniveaus des neu angeschlossenen Kommunikationsknotens (110) basierend darauf, ob der Kommunikationsparameter, der durch die Überwachungseinheit (1082) überwacht wird, einem vorbestimmten Kommunikationszustand entspricht, und
Ändern des vorbestimmten Kommunikationszustands basierend auf dem bestimmten Zuverlässigkeitsniveau, wobei
das Gateway (106) ferner eine erste Authentifizierungseinheit (1078) beinhaltet, die konfiguriert ist, um den neu angeschlossenen Kommunikationsknoten (110) zu authentifizieren;
die Überwachungseinheit (1082) konfiguriert ist, um den Kommunikationsparameter der Kommunikation zu überwachen, die zwischen dem Gateway (106) und dem neu angeschlossenen Kommunikationsknoten (110) durchgeführt wird, der durch die erste Authentifizierungseinheit (1078) authentifiziert wurde;
die Kommunikationssteuereinheit (1088) konfiguriert ist, um den vorbestimmten Kommunikationszustand basierend auf Zuverlässigkeitsinformationen zu identifizieren, die von dem neu angeschlossenen Kommunikationsknoten (110) übertragen werden, und um das Zuverlässigkeitsniveau des neu angeschlossenen Kommunikationsknotens (110) basierend auf dem identifizierten vorbestimmten Kommunikationszustand zu bestimmen; und
der neu angeschlossene Kommunikationsknoten (110) eine zweite Authentifizierungseinheit (1104) beinhaltet, die konfiguriert ist, um die Zuverlässigkeitsinformationen des neu angeschlossenen Kommunikationsknotens (110) zu übertragen, wenn das Gateway (106) aufgefordert wird, den neu angeschlossenen Kommunikationsknoten (110) zu authentifizieren.

2. Netzsystem nach Anspruch 1, wobei
das Netzsystem eine Vielzahl der Kommunikationsknoten (102, 104, 110) beinhaltet;
die Vielzahl der Kommunikationsknoten (102, 104, 110) mehrere Subnetze bilden; und
die Kommunikationssteuereinheit (1088) konfiguriert ist, um das Zuverlässigkeitsniveau des neu angeschlossenen Kommunikationsknotens (110) basierend darauf zu bestimmen, ob der Kommunikationsparameter, der durch die Überwachungseinheit (1082) überwacht wird, dem vorbestimmten Kommunikationszustand entspricht, wenn eine Kommunikation zwischen den zu unterschiedlichen Subnetzen gehörenden Kommunikationsknoten (102, 104, 110) durchgeführt werden soll, und um den vorbestimmten Kommunikationszustand basierend auf dem bestimmten Zuverlässigkeitsniveau zu ändern.

3. Netzsystem nach Anspruch 1, wobei die Überwachungseinheit (1082) konfiguriert ist, um eines von einer Kommunikationsrate der Kommunikation zwischen dem Gateway (106) und dem neu angeschlossenen Kommunikationsknoten (110), einem Kommunikationsziel des neu angeschlossenen Kommunikationsknotens (110) und einer Funktion zu überwachen, die für den neu angeschlossenen Kommunikationsknoten (110) verfügbar ist.

4. Kommunikationssteuerverfahren, das durch ein Gateway (106) in einem Netzsystem ausgeführt wird, das einen oder mehrere Kommunikationsknoten (102, 104, 110) und das Gateway (106) beinhaltet, wobei das Kommunikationssteuerverfahren Folgendes umfasst:
Übertragen von Zuverlässigkeitsinformationen des neu angeschlossenen Kommunikationsknotens (110) durch eine zweite Authentifizierungseinheit (1104), die in dem neu angeschlossenen Kommunikationsknoten (110) beinhaltet ist, wenn das Gateway (106) aufgefordert wird, den neu angeschlossenen Kommunikationsknoten (110) zu authentifizieren;
Authentifizieren des neu angeschlossenen Kommunikationsknotens (110) durch eine erste Authentifizierungseinheit (1078), die in dem Gateway (106) beinhaltet ist;
Überwachen eines Kommunikationsparameters einer Kommunikation, die zwischen dem Gateway (106) und dem neu angeschlossenen Kommunikationsknoten (110) durchgeführt wird, der neu an das Netzsystem angeschlossen ist und authentifiziert wurde;
Identifizieren eines vorbestimmten Kommunikationszustands basierend auf den Zuverlässigkeitsinformationen, die von dem neu angeschlossenen Kommunikationsknoten (110) übertragen werden;
Bestimmen eines Zuverlässigkeitsniveaus des neu angeschlossenen Kommunikationsknotens (110) basierend darauf, ob der überwachte Kommunikationsparameter dem identifizierten vorbestimmten Kommunikationszustand entspricht; und
Ändern des vorbestimmten Kommunikationszustands basierend auf dem bestimmten Zuverlässigkeitsniveau.

5. Computerlesbares Speichermedium, das ein Programm speichert, das ein Gateway (106) in einem Netzsystem, das einen oder mehrere Kommunikationsknoten (102, 104, 110) und das Gateway (106) beinhaltet, dazu veranlasst, das Kommunikationssteuerverfahren nach dem vorhergehenden Anspruch auszuführen.

## Revendications

1. Système de réseau, comprenant :
un ou plusieurs noeuds de communication (102, 104, 110) ; et
une passerelle comprenant
une unité de surveillance (1082) conçue pour surveiller un paramètre de communication d'une communication effectuée entre la passerelle et un noeud de communication nouvellement connecté (110) qui est a été récemment connecté au système de réseau,
une unité de commande de communication (1088) conçue pour déterminer un niveau de fiabilité du noeud de communication nouvellement connecté (110) selon si le paramètre de communication surveillé par l'unité de surveillance (1082) est conforme à une condition de communication prédéterminée, et changer la condition de communication prédéterminée en fonction du niveau de fiabilité déterminé,
la passerelle (106) comprenant en outre une première unité d'authentification (1078) conçue pour authentifier le noeud de communication nouvellement connecté (110) ;
une unité de surveillance (1082) étant conçue pour surveiller le paramètre de communication de la communication effectuée entre la passerelle (106) et le noeud de communication nouvellement connecté (110) qui est a été authentifié par la première unité d'authentification (1078) ;
l'unité de commande de communication (1088) étant conçue pour identifier la condition de communication prédéterminée en fonction d'informations de fiabilité transmises à partir du noeud de communication nouvellement connecté (110) et pour déterminer le niveau de fiabilité du noeud de communication nouvellement connecté (110) en fonction de la condition de communication prédéterminée identifiée ; et
le noeud de communication nouvellement connecté (110) comprend une deuxième unité d'authentification (1104) conçue pour transmettre les informations de fiabilité du noeud de communication nouvellement connecté (110) lors de la demande à la passerelle d'authentifier le noeud de communication nouvellement connecté (110).

2. Système de réseau selon la revendication 1, dans lequel
le système de réseau comprend une pluralité de noeuds de communication (102, 104, 110) ;
la pluralité des noeuds de communication (102, 104, 110) forment de multiples sous-réseaux ; et
l'unité de commande de communication (1088) est conçue pour déterminer le niveau de fiabilité du noeud de communication nouvellement connecté (110) selon si le paramètre de communication surveillé par l'unité de surveillance (1082) est conforme à la condition de communication prédéterminée lorsque la communication doit être effectuée entre les noeuds de communication (102, 104, 110) appartenant aux différents sous-réseaux, et pour changer la condition de communication prédéterminée en fonction du niveau de fiabilité déterminé.

3. Système de réseau tel que défini dans la revendication 1, dans lequel l'unité de surveillance (1082) est conçue pour surveiller une vitesse de communication de la communication entre la passerelle (106) et le noeud de communication nouvellement connecté (110), une cible de communication du noeud de communication nouvellement connecté (110) ou une fonction disponible pour le noeud de communication nouvellement connecté (110).

4. Procédé de commande de communication effectué par une passerelle (106) dans un système de réseau comprenant un ou plusieurs noeuds de communication (102, 104, 110) et la passerelle (106), le procédé de commande de communication comprenant :
la transmission, par une deuxième unité d'authentification (1104) comprise dans le noeud de communication nouvellement connecté (110), d'informations de fiabilité du noeud de communication nouvellement connecté (110) lors de la demande à la passerelle (106) d'authentifier le noeud de communication nouvellement connecté (110) ;
l'authentification, par une première unité d'authentification (1078) comprise dans la passerelle (106), du noeud de communication nouvellement connecté (110) ;
la surveillance d'un paramètre de communication effectuée entre la passerelle (106) et le noeud de communication nouvellement connecté (110) qui est a été récemment connecté au système de réseau et a été authentifié ;
l'identification d'une condition de communication prédéterminée en fonction des informations de fiabilité transmises à partir du noeud de communication nouvellement connecté (110) ;
la détermination d'un niveau de fiabilité du noeud de communication nouvellement connecté (110) selon si le paramètre de communication surveillé est conforme à la condition de communication prédéterminée identifiée ; et
le changement de la condition de communication prédéterminée en fonction du niveau de fiabilité déterminé.

5. Support de stockage lisible par ordinateur stockant un programme destiné à amener une passerelle (106) dans un système de réseau comprenant un ou plusieurs noeuds de communication (102, 104, 110) et la passerelle (106) à effectuer le procédé de commande de communication selon la revendication précédente.
